# EUROPEAN PATENT SPECIFICATION

(11) **EP 4 321 363 B1**
(45) Date of publication and mention of the grant of the patent: **22.04.2026**
(21) Application number: 22837383.3
(22) Date of filing: 07.06.2022
(51) Int. Cl.: B60K 7/00, B60G 7/00

(54) **ELECTRIC WHEEL SYSTEM**
ELEKTRISCHES RADSYSTEM
SYSTÈME DE ROUE ÉLECTRIQUE

(30) Priority: 05.07.2021 JP 2021111239
(43) Date of publication of application: 14.02.2024
(73) Proprietor: Hitachi, Ltd., Tokyo 100-8280 (JP)
(72) Inventor: ASAI, Kyota, Tokyo 100-8280 (JP); NAMBA, Akihiro, Tokyo 100-8280 (JP); SUTO, Tetsuya, Tokyo 100-8280 (JP); TAKAHASHI, Akeshi, Tokyo 100-8280 (JP)
(74) Representative: Manitz Finsterwald Patent- und Rechtsanwaltspartnerschaft mbB
(86) International application number: PCT/JP2022/022992
(87) International publication number: WO 2023/281964

(56) References cited:
- WO-A1-2017/006429
- DE-A1- 102011 081 503
- JP-A- 2007 161 053
- JP-A- 2014 189 036
- JP-A- 2021 045 988
- US-A1- 2014 117 744

## Description

### Technical Field

The present invention relates to an electric wheel system.

### Background Art

In recent years, in the automobile industry, an electric vehicle of an in-wheel motor system in which a motor (electric motor) is incorporated in a wheel of a vehicle wheel has been developed in order to improve vehicle controllability and expand a vehicle interior space. In an electric vehicle of the in-wheel motor system, it is desirable to dispose an inverter in the vicinity of a wheel from the viewpoint of simplification of a wiring cable, downsizing of a vehicle configuration, and the like.

PTL 1 discloses an electric wheel system (vehicle driving device) including a motor that is provided in a wheel of a vehicle wheel and drives the vehicle wheel, an inverter that controls power applied to the motor, and a suspension arm provided between the vehicle wheel and a vehicle body. In this electric wheel system, the inverter is fixed to a suspension arm (upper arm) to receive traveling wind, and the suspension arm functions as a heat radiator of the inverter, so that cooling performance of the inverter is ensured.

### Citation List

### Patent Literature

PTL 1: JP 2007-161053 A

### Summary of Invention

### Technical Problem

However, in the technique described in PTL 1, since the inverter is fixed to the suspension arm and a distance between the inverter and the motor is long, there is room for improvement from the viewpoint of downsizing of the electric wheel system. Here, in a case where the inverter is disposed near the motor in order to downsize the electric wheel system, and a position of a connection portion of the suspension arm is moved away from a tire or a position of a lower arm is lowered in order to avoid interference between the inverter and the suspension arm, there is a possibility that a kingpin offset becomes large and stability of a vehicle deteriorates.

An object of the present invention is to achieve downsizing of an electric wheel system while ensuring stability of a vehicle at the time of steering.

### Solution to Problem

The present invention is defined by the appended claim 1, the dependent claims show further advantageous embodiments of the invention.

### Advantageous Effects of Invention

According to the present invention, it is possible to achieve downsizing of an electric wheel system while ensuring stability of a vehicle at the time of steering.

### Brief Description of Drawings

[FIG. 1] FIG. 1 is a side view of an electric wheel system, and is a diagram of the electric wheel system as viewed from a first direction D1 in FIG. 2.
[FIG. 2] FIG. 2 is a schematic cross-sectional view of the electric wheel system, and illustrates a cross section taken along line II-II in FIG. 1.
[FIG. 3] FIG. 3 is a diagram of an inverter in a state in which an inverter cover is removed as viewed from the first direction D1 in FIG. 2.
[FIG. 4] FIG. 4 is a diagram of the inverter as viewed from a second direction D2 in FIG. 2.
[FIG. 5] FIG. 5 is a diagram of a motor as viewed from the first direction D1 in FIG. 2.
[FIG. 6] FIG. 6 is a diagram of the motor as viewed in the second direction D2 of FIG. 2.

### Description of Embodiments

Hereinafter, an electric wheel system according to an embodiment of the present invention will be described with reference to the drawings. Note that, in the drawings, the same elements are denoted by the same reference numerals, and redundant description is omitted. In description below, vertical, horizontal, front and rear directions and positions are based on an attitude in which an electric vehicle (hereinafter, also referred to as a vehicle) on which the electric wheel system is mounted travels straight on a horizontal road surface.

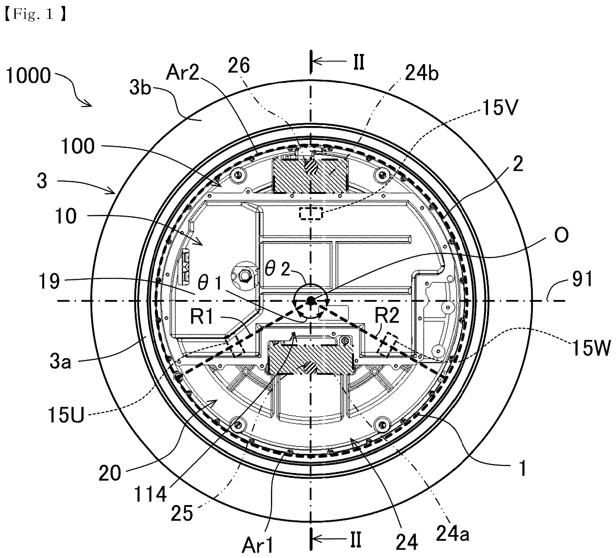

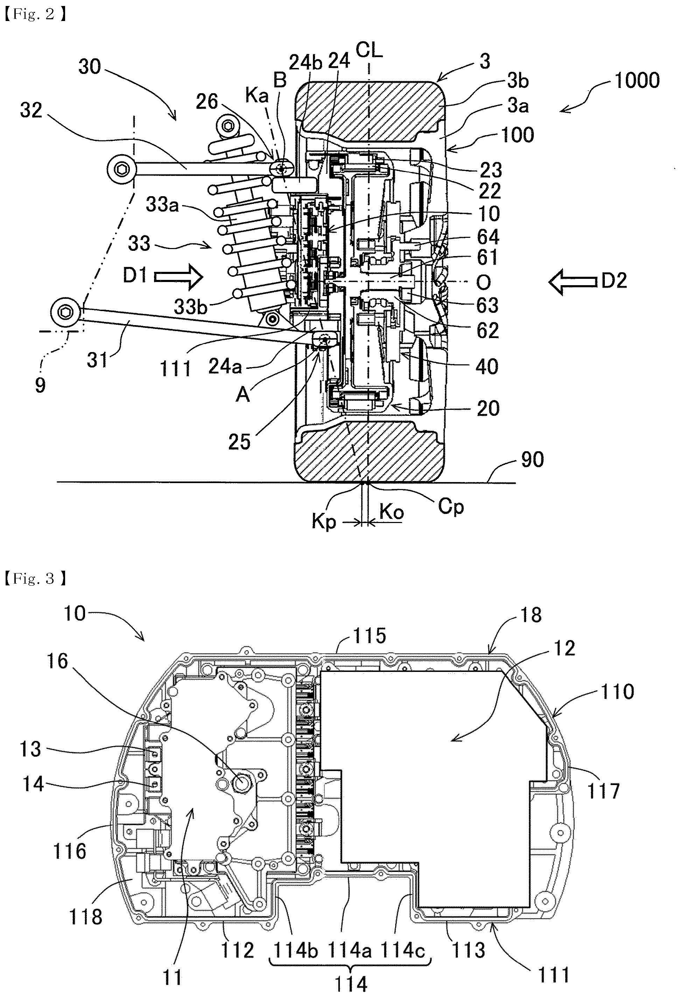

FIG. 1 is a side view of an electric wheel system 1000 according to an embodiment of the present invention, and is a diagram of the electric wheel system 1000 as viewed from a first direction D1 of FIG. 2. FIG. 2 is a schematic cross-sectional view of the electric wheel system 1000, and illustrates a cross section taken along line II-II in FIG. 1. As illustrated in FIGS. 1 and 2, the electric wheel system 1000 includes an electric wheel unit 100 constituting a power unit of a vehicle, a vehicle suspension device 30 (see FIG. 2) that connects a vehicle wheel 3 and a vehicle body 9, and a braking device 40 (see FIG. 2) that brakes the vehicle wheel 3 of a vehicle.

The electric wheel unit 100 includes a motor 20 that outputs driving torque, and an inverter 10 that converts DC power from a power supply device (not illustrated) such as a battery into AC power in order to control the motor 20. The inverter 10 is attached to an end portion in an axial direction of the motor 20 with a screw or the like. The motor 20 and the inverter 10 are provided in a wheel 3a of the vehicle wheel 3. By integrating the electric wheel unit 100, which is a power unit of a vehicle, in the wheel 3a, downsizing of the entire electric wheel system 1000 is realized. As a result, a vehicle interior space can be enlarged.

A motor 20 illustrated in FIG. 2 is a three-phase AC motor, and includes a rotor 22, a stator 23, and a motor housing 24 that supports the stator 23. The stator 23 includes a cylindrical stator core and a U-phase coil, a V-phase coil, and a W-phase coil mounted on the stator core. The rotor 22 includes a cylindrical rotor core and a permanent magnet attached to the rotor core. The rotor 22 is rotatably provided on the inner peripheral side of the stator 23 with a gap.

When AC power is supplied from the inverter 10 to a coil of each phase, a rotating magnetic field is generated, and the rotor 22 rotates about a rotation center axis (hereinafter, also referred to as a rotation shaft) O. The rotor 22 is connected to a shaft 61. The shaft 61 protrudes from the motor housing 24 in the first direction D1 (right direction in the diagram). A hub 62 is spline-coupled to a protruding portion of the shaft 61. The hub 62 is fastened to the shaft 61 by a nut 63. The hub 62 is provided with a plurality of hub bolts 64. The wheel 3a is fastened to the hub 62 by a hub bolt 64 and a nut (not illustrated). A tire 3b is mounted on the wheel 3a.

As described above, since the rotor 22 is connected to the wheel 3a, the vehicle wheel 3 is driven as a rotational force of the rotor 22 is transmitted to the wheel 3a.

In the present description, an "axial direction", a "circumferential direction", and a "radial direction" are as described below. The "axial direction" is a direction along the rotation axis O of the rotor 22. The "circumferential direction" is a direction along a rotation direction of the rotor 22, that is, a circumferential direction around the rotation axis O. The "radial direction" is a direction orthogonal to the rotation axis O, that is, a radial direction of a circle around the rotation axis O. Further, an "inner peripheral side" refers to the inner side in the radial direction (inner diameter side), and an "outer peripheral side" refers to the opposite direction, that is, the outer side in the radial direction (outer diameter side). Furthermore, a surface on the vehicle body side (inner side in a vehicle width direction) of the inverter 10 and the motor 20 is also referred to as a "front surface", and a surface on the side opposite to the vehicle body side (outer side in the vehicle width direction) of the inverter 10 and the motor 20 is also referred to as a "back surface". Further, the first direction D1 is a direction from the vehicle body side (inner side in the vehicle width direction) toward the side opposite to the vehicle body side (outer side in the vehicle width direction), and the second direction D2 is a direction from the side opposite to the vehicle body side (outer side in the vehicle width direction) toward the vehicle body side (inner side in the vehicle width direction).

The vehicle suspension device 30 includes a lower arm (first arm) 31 that connects the ground side (lower side) of the electric wheel unit 100 and the vehicle body 9, an upper arm (second arm) 32 that connects a top side (upper side) of the electric wheel unit 100 and the vehicle body 9, and a suspension 33 having an upper end portion rotatably connected to the vehicle body 9 and a lower end portion rotatably connected to the lower arm 31. One end portion of the lower arm 31 is vertically swingably connected to the vehicle body 9, and the other end portion is rotatably connected to the motor housing 24. One end portion of the upper arm 32 is vertically swingably connected to the vehicle body 9, and the other end portion is rotatably connected to the motor housing 24.

The suspension 33 includes a shock absorber 33a and a spring 33b externally mounted on the shock absorber 33a. The suspension 33 transmits a vehicle body load and a loading load to the vehicle wheel 3, and absorbs and attenuates an impact acting on the vehicle wheel 3 from a road surface 90. In the shock absorber 33a, an end portion of a cylinder tube is connected to the lower arm 31, and a tip portion of a rod protruding upward from the cylinder tube is connected to the vehicle body 9. The cylinder tube of the shock absorber 33a is disposed between the lower arm 31 and the upper arm 32.

The motor housing 24 includes a lower ball joint 25 which is a first arm connection portion connected to the lower arm 31, and an upper ball joint 26 which is a second arm connection portion connected to the upper arm 32. The lower ball joint 25 is attached to a lower joint attachment portion 24a provided in the motor housing 24, and the upper ball joint 26 is attached to an upper joint attachment portion 24b provided in the motor housing 24.

The lower joint attachment portion 24a and the upper joint attachment portion 24b may be fastened to the motor housing 24 by a fastening member such as a bolt as a member separate from the motor housing 24, or may be integrally molded with the motor housing 24. The lower joint attachment portion 24a and the upper joint attachment portion 24b are provided so as to protrude from a surface of the motor housing 24 toward the vehicle body side. The upper ball joint 26 is disposed closer to the vehicle body side than the lower ball joint 25.

The inverter 10 is disposed at a position overlapping a kingpin axis Ka that is a straight line connecting a rotation center A of the lower ball joint 25 and a rotation center B of the upper ball joint 26. More specifically, the inverter 10 is disposed at a position overlapping a line segment AB connecting the rotation center A of the lower ball joint 25 and the rotation center B of the upper ball joint 26.

The lower arm 31 extends from the vehicle body 9 to below the inverter 10, and a tip portion of the lower arm 31 is arranged to face a lower surface portion 111 of the inverter 10. The lower ball joint 25 is disposed to face the lower surface portion 111 of the inverter 10 with the lower joint attachment portion 24a interposed between them. As described above, in the present embodiment, the lower arm 31 extends from the vehicle body side to the inside of the wheel 3a, and is connected to the motor housing 24 via the lower ball joint 25 on the lower side of the inverter 10. For this reason, a kingpin offset Ko can be made small. The kingpin offset Ko refers to a distance from a point Kp where the kingpin axis Ka intersects the road surface 90 to a grounding center point Cp of the tire 3b. The grounding center point Cp of the tire 3b refers to a point at which a center line (hereinafter, also referred to as a width center line) CL in a width direction of the tire 3b parallel to a vertical axis (axis extending in a gravity direction) intersects the road surface 90. The smaller the kingpin offset Ko, the higher the stability of a vehicle at the time of steering of a steering wheel.

As illustrated in FIG. 1, the motor housing 24 has a circular outer shape around the rotation axis O when viewed from the first direction D1. In a case of being viewed from a direction along the rotation axis O of the rotor 22 (corresponding to the axial direction of the motor 20), the motor housing 24 includes a first sector area 1 that is a sector area having a central angle θ1 about the rotation axis O of 120°, and a second sector area 2 that is a sector area having a central angle 62 about the rotation axis O of 240°. The first sector area 1 and the second sector area 2 are indicated by a thick broken line for convenience. As illustrated, the first sector area 1 is an area surrounded by a first radius R1, a second radius R2, and an arc Ar1 between the first radius R1 and the second radius R2. The second sector area 2 is an area surrounded by the first radius R1, the second radius R2, and an arc Ar2 between the first radius R1 and the second radius R2.

The first sector area 1 is disposed on the ground side (lower side) of the motor housing 24, and the second sector area 2 is disposed on the top side (upper side) of the motor housing 24. When a vehicle is located on the horizontal road surface 90, the entire arc Ar1 of the first sector area 1 is located below a reference surface 91 that passes through the rotation axis O and is parallel to the horizontal. The first sector area 1 is disposed such that a center in the circumferential direction of the arc Ar1 is located further on the lower side than the reference surface 91, and the second sector area 2 is disposed such that a center in the circumferential direction of the arc Ar2 is located further on the upper side than the reference surface 91. The first sector area 1 and the second sector area 2 are line-symmetric with respect to a virtual plane (II-II line cross section) including the entire rotation axis O.

In Fig. 1, outer shapes of the lower ball joint 25 and the lower joint attachment portion 24a, and the upper ball joint 25 and the upper joint attachment portion 24b are indicated by two-dot chain lines, and sizes of the outer shapes are schematically indicated by hatching. As illustrated in FIG. 1, when the electric wheel unit 100 is viewed from the axial direction, the lower ball joint 25 is disposed in the first sector area 1, and the upper ball joint 26 is disposed in the second sector area 2.

Further, when the electric wheel unit 100 is viewed from the axial direction, electrical connection portions 15U, 15V, and 15W of phases between the inverter 10 and the motor 20 are disposed in the second sector area 2. Since the electrical connection portions 15U, 15V, and 15W are concentrated in the second sector area 2, the lower ball joint 25 and the lower joint attachment portion 24a provided in the first sector area 1 can be disposed close to the rotation axis O side.

In the present embodiment, the lower ball joint 25 and the lower joint attachment portion 24a are disposed at a position closer to the rotation axis O than a lower end of the motor housing 24. A distance in the radial direction between the rotation center A of the lower ball joint 25 and the rotation axis O is equal to or less than half a radius of an outermost periphery of the motor 20 (an outermost periphery of the motor housing 24). Therefore, in the present embodiment, an inclination angle of the kingpin axis Ka with respect to the vertical axis can be made large as compared with a case where the lower ball joint 25 is disposed close to the lower end side of the motor housing 24. By the above, since the kingpin offset Ko can be made small, stability of a vehicle at the time of steering of a steering wheel is improved.

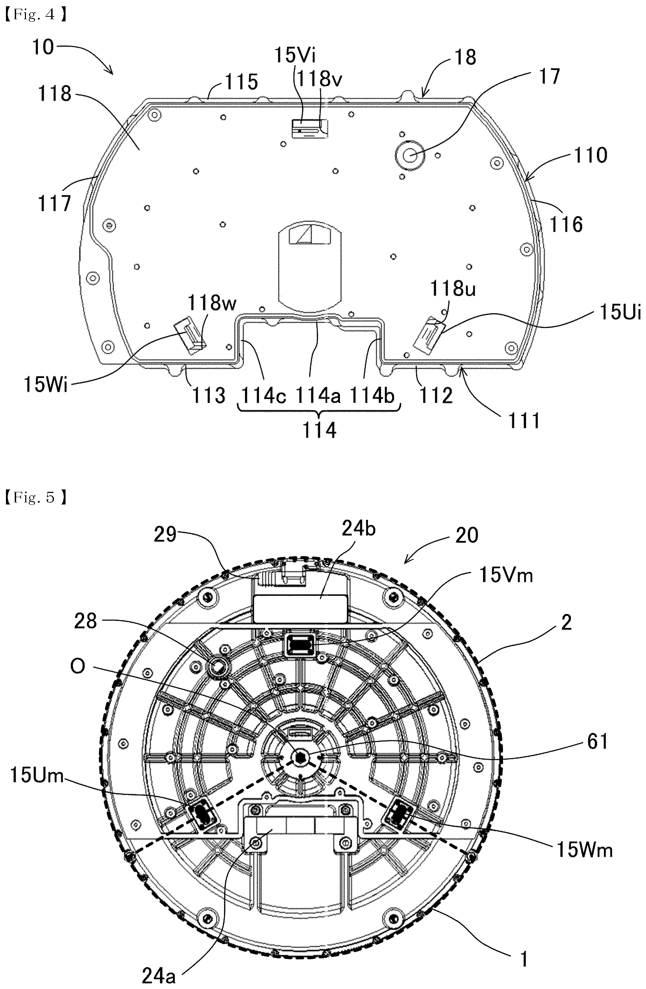

A configuration of the inverter 10 will be described with reference to FIGS. 1, 3, and 4. FIG. 3 is a diagram of the inverter 10 in a state where an inverter cover 19 is removed as viewed from the first direction D1 of FIG. 2, and FIG. 4 is a diagram of the inverter 10 as viewed from the second direction D2 of FIG. 2. As illustrated in FIG. 3, the inverter 10 includes a power circuit unit 11 that converts DC power into AC power, a control circuit 12 that controls the power circuit unit 11, a box-shaped inverter case 18 that houses the power circuit unit 11 and the control circuit 12, and the inverter cover 19 (see FIG. 1) that covers an opening portion of the inverter case 18. The inverter cover 19 (see FIG. 1) is connected to the inverter case 18 with a screw or the like.

As illustrated in FIGS. 3 and 4, the inverter case 18 includes a planar back surface portion 118 disposed to face the motor housing 24 and a side plate 110 rising from the back surface portion 118 in the second direction D2. The side plate 110 is provided along an outer periphery of the back surface portion 118. The side plate 110 includes an upper surface portion 115 disposed on the top side (upper side) of the inverter case 18, the lower surface portion 111 disposed on the ground side (lower side) of the inverter case 18, and curved portions 116 and 117 connecting the upper surface portion 115 and the lower surface portion 111. The lower surface portion 111 is provided with a recessed portion 114 recessed upward.

The lower surface portion 111 includes a first lower surface portion 112 and a second lower surface portion 113 provided at an end portion in a front-rear direction of a vehicle, a first side surface portion 114b extending upward from an end portion on the inverter center side of the first lower surface portion 112, a second side surface portion 114c extending upward from an end portion on the inverter center side of the second lower surface portion 113, and a bottom surface portion 114a connecting an upper end portion of the first side surface portion 114b and an upper end portion of the second side surface portion 114c. The recessed portion 114 is formed by the plate-shaped bottom surface portion 114a extending in the front-rear direction of a vehicle, and the first side surface portion 114b and the second side surface portion 114c extending downward from both end portions of the bottom surface portion 114a, and has a rectangular shape. As illustrated in FIG. 1, the lower joint attachment portion 24a is disposed in the recessed portion 114.

As illustrated in FIG. 3, the power circuit unit 11 and the control circuit 12 are disposed adjacent to each other in the horizontal direction (the front-rear direction of a vehicle) orthogonal to the axial direction. In the example illustrated in FIG. 3, the power circuit unit 11 is disposed on the left side of the inverter case 18 in the diagram, and the control circuit 12 is disposed on the right side of the inverter case 18.

The power circuit unit 11 includes a plurality of switching semiconductor elements such as an insulated gate bipolar transistor (IGBT) and a plurality of diodes.

The power circuit unit 11 is connected to a power supply device (not illustrated) such as a battery via a positive electrode power supply terminal 13 and a negative electrode power supply terminal 14, and electric energy necessary for driving the motor 20 is supplied from the power supply device to the power circuit unit 11. The power circuit unit 11 converts DC power supplied from the power supply device into AC power and supplies the AC power to the motor 20. By the above, the motor 20 rotates and a vehicle is driven.

In the power circuit unit 11, a series circuit of upper and lower arms is configured by an IGBT and a diode on the positive electrode side (upper arm side) and an IGBT and a diode on the negative electrode side (lower arm side). The upper and lower arms are configured for each phase.

The control circuit 12 gives a drive signal to the plurality of switching semiconductor elements constituting the upper and lower arms based on a command from a host controller (not illustrated). The switching semiconductor element performs conduction or cutoff operation based on a drive signal from the control circuit 12, and converts DC power supplied from the power supply device into three-phase AC power. The converted AC power is supplied to the motor 20 via the three electrical connection portions 15U, 15V, and 15W.

The power circuit unit 11 is provided with a smoothing capacitor (not illustrated) that smooths voltage applied to the inverter 10. The smoothing capacitor is electrically connected to the DC positive electrode side and the DC negative electrode side of the power circuit unit 11. Transient current generated during switching operation of a switching semiconductor element of the inverter 10 flows into the smoothing capacitor and is smoothed by the smoothing capacitor. As a result, a path of transient current at the time of switching operation is completed only in the power circuit unit 11, and inductance can be reduced as a current path is shortened.

Further, the control circuit 12 is disposed in the immediate vicinity of the power circuit unit 11. For this reason, increase in loss can be prevented by reducing inductance of a control signal and preventing lowering in element driving performance.

As illustrated in FIG. 4, a U-phase AC terminal 15Ui, a V-phase AC terminal 15Vi, and a W-phase AC terminal 15Wi of the inverter 10 are disposed at intervals of 120° in the circumferential direction (circumferential direction around the rotation axis O). On the back surface portion 118 of the inverter case 18, opening portions 118u, 118v, and 118w are provided at positions corresponding to the U-phase AC terminal 15Ui, the V-phase AC terminal 15Vi, and the W-phase AC terminal 15Wi of the inverter 10.

FIG. 5 is a diagram of the motor 20 as viewed from the first direction D1 in FIG. 2. As illustrated in FIG. 5, a U-phase AC terminal 15Um, a V-phase AC terminal 15Vm, and a W-phase AC terminal 15Wm of the motor 20 are provided on a surface (surface on the vehicle body side) of the motor housing 24. The U-phase AC terminal 15Um, the V-phase AC terminal 15Vm, and the W-phase AC terminal 15Wm of the motor 20 are disposed at intervals of 120° in the circumferential direction (circumferential direction around the rotation axis O) in the second sector area 2 of the motor housing 24.

The U-phase AC terminal 15Um, the V-phase AC terminal 15Vm, and the W-phase AC terminal 15Wm of the motor 20 are provided so as to protrude from a surface (surface on the vehicle body side) of the motor housing 24 toward the inverter 10. When the inverter 10 is attached to the front surface side of the motor housing 24, the U-phase AC terminal 15Um, the V-phase AC terminal 15Vm, and the W-phase AC terminal 15Wm of the motor 20 are inserted into the opening portions 118u, 118v, and 118w provided in the back surface portion 118 of the inverter 10.

As illustrated in FIG. 1, the U-phase electrical connection portion 15U is formed as the U-phase AC terminal 15Ui (see FIG. 4) of the inverter 10 and the U-phase AC terminal 15Um (see FIG. 5) of the motor 20 are connected by screwing or the like. The V-phase electrical connection portion 15V is formed as the V-phase AC terminal 15Vi (see FIG. 4) of the inverter 10 and the V-phase AC terminal 15Vm (see FIG. 5) of the motor 20 are connected by screwing or the like. The W-phase electrical connection portion 15W is formed as the W-phase AC terminal 15Wi (see FIG. 4) of the inverter 10 and the W-phase AC terminal 15Wm (see FIG. 5) of the motor 20 are connected by screwing or the like.

The V-phase electrical connection portion 15V is disposed on the vertical axis orthogonal to the rotation axis O, and the entire V-phase electrical connection portion 15V is disposed in the second sector area 2 when viewed from the axial direction. The U-phase electrical connection portion 15U and the W-phase electrical connection portion 15W are disposed so as to cross a boundary between the first sector area 1 and the second sector area 2 when viewed from the axial direction. That is, when viewed from the axial direction, a part of the U-phase electrical connection portion 15U is disposed in the first sector area 1, and the rest is disposed in the second sector area 2. Similarly, when viewed from the axial direction, a part of the W-phase electrical connection portion 15W is disposed in the first sector area 1, and the rest is disposed in the second sector area 2.

The U-phase electrical connection portion 15U and the W-phase electrical connection portion 15W are disposed on both sides in the horizontal direction of the lower joint attachment portion 24a and the recessed portion 114. In other words, the recessed portion 114 and the lower joint attachment portion 24a are disposed between the U-phase electrical connection portion 15U and the W-phase electrical connection portion 15W.

As illustrated in FIGS. 3 and 4, the power circuit unit 11 has an inverter refrigerant inlet 16 (see FIG. 3) for taking a refrigerant into the power circuit unit 11, an in-circuit flow path (not illustrated) through which a refrigerant flows, and an inverter refrigerant outlet 17 (see FIG. 4) for taking out, from the power circuit unit 11, a refrigerant having flowed through the in-circuit flow path. The inverter refrigerant inlet 16 is provided on the front surface side (vehicle body side) of the inverter 10, and the inverter refrigerant outlet 17 is provided on the back surface side (motor side) of the inverter 10.

The refrigerant is, for example, vegetable oil such as palm oil, or electrically insulating oil such as mineral oil. The refrigerant circulates in a cooling system including a pump and a heat exchanger (not illustrated). A refrigerant discharged from the pump is supplied from the inverter refrigerant inlet 16 to the in-circuit flow path, directly cools each component such as a switching semiconductor element, and is discharged from the inverter refrigerant outlet 17. This makes it possible to prevent increase in thermal resistance due to increase in length of a heat dissipation path and to increase output of the inverter 10.

As illustrated in FIG. 5, the motor 20 includes a motor refrigerant inlet 28 for taking a refrigerant into the motor 20, an in-motor flow path (not illustrated) through which a refrigerant flows, and a motor refrigerant outlet 29 for taking out, from the motor 20, a refrigerant that has flowed through the in-motor flow path. The motor refrigerant inlet 28 and the motor refrigerant outlet 29 are provided on the front surface side (vehicle body side) of the motor 20.

The motor refrigerant inlet 28 (see FIG. 5) is connected to the inverter refrigerant outlet 17 (see FIG. 4). For example, the inverter refrigerant outlet 17 and the motor refrigerant inlet 28 have a cylindrical shape, and have tip portions abutting on each other. A seal member such as an O-ring is provided between the inverter refrigerant outlet 17 and the motor refrigerant inlet 28, and a gap between the inverter refrigerant outlet 17 and the motor refrigerant inlet 28 is sealed. The inverter 10 is screwed to the motor 20, so that the inverter refrigerant outlet 17 and the motor refrigerant inlet 28 are directly connected.

By the above, a refrigerant discharged from the pump (not illustrated) and supplied to the in-circuit flow path (not illustrated) of the inverter 10 is supplied from the motor refrigerant inlet 28 (see FIG. 5) to the in-motor flow path (not illustrated) through the inverter refrigerant outlet 17, directly cools the rotor 22 and the stator 23 (see FIG. 2), and is discharged from the motor refrigerant outlet 29 (see FIG. 5). The refrigerant discharged from the motor refrigerant outlet 29 is cooled by a heat exchanger (not illustrated), and is supplied from the inverter refrigerant inlet 16 (see FIG. 3) into the inverter 10 again by a pump (not illustrated).

Since the rotor 22 and the stator 23 are directly cooled by a refrigerant, it is possible to increase output of the motor 20. Note that, in the present embodiment, a refrigerant that cools the inverter 10 is supplied to the motor 20 to cool the motor 20, and the motor 20 and the inverter 10 are cooled by a common refrigerant. In the present embodiment, since a common cooling system is used for the inverter 10 and the motor 20, a cooling system can be downsized and the entire electric wheel system 1000 can be downsized as compared with a case where a cooling system of the inverter 10 and a cooling system of the motor 20 are individually provided. Further, since the inverter 10 is attached to the front surface (surface on the vehicle body side) of the motor 20, it is not necessary to provide a pipe such as a hose connecting the inverter refrigerant outlet 17 and the motor refrigerant inlet 28.

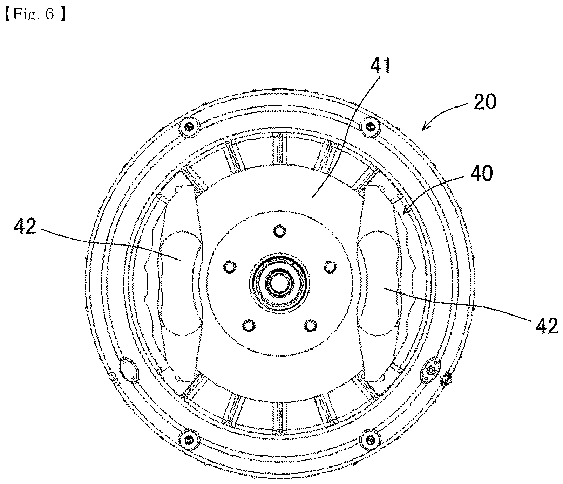

FIG. 6 is a diagram of the motor 20 as viewed from the second direction D2 in FIG. 2. As illustrated in FIG. 6, the braking device 40 is disposed on the back surface side (side opposite to the vehicle body side) of the motor 20. That is, as illustrated in FIG. 2, the braking device 40 is disposed in a space between the motor housing 24 and a spoke of the wheel 3a in the wheel 3a. As illustrated in FIG. 6, the braking device 40 includes a brake disc 41 that rotates together with the rotor 22 and a brake caliper 42 fixed to the motor housing 24. The brake disc 41 is fastened together with the wheel 3a to the hub 62 by, for example, the hub bolt 64 and a nut. A brake pad supported by the brake caliper 42 sandwiches the brake disc 41 to brake rotation of the brake disc 41. When the brake caliper 42 stops rotation of the brake disc 41, rotation of the rotor 22 stops. That is, the braking device 40 can brake and stop rotation of the vehicle wheel 3.

According to the above-described embodiment, a function and an effect described below are obtained.

(1) The electric wheel system 1000 includes the electric wheel unit 100 including the motor 20 that is provided in the wheel 3a of the vehicle wheel 3 and drives the vehicle wheel 3, and the inverter 10 that is attached to an end portion in the axial direction of the motor 20 and controls the motor 20, the lower arm (first arm) 31 that connects a ground side of the electric wheel unit 100 and the vehicle body 9, and the upper arm (second arm) 32 that connects a top side of the electric wheel unit 100 and the vehicle body 9. The motor 20 includes the rotor 22, the stator 23, and the motor housing 24 that supports the stator 23. The motor housing 24 includes the lower ball joint (first arm connection portion) 25 connected to the lower arm 31 and the upper ball joint (second arm connection portion) 26 connected to the upper arm 32. The inverter 10 is disposed at a position overlapping the line segment AB connecting the lower ball joint 25 and the upper ball joint 26. In a case of being viewed from a direction along the rotation axis O of the rotor 22, the motor housing 24 has the first sector area 1 in which the central angle θ1 about the rotation axis O is 120° and the second sector area 2 in which the central angle θ2 about the rotation axis O is 240°. The first sector area 1 is disposed on the ground side (lower side) of the motor housing 24, and the second sector area 2 is disposed on the top side (upper side) of the motor housing 24. The lower ball joint 25 is disposed in the first sector area 1, and the electrical connection portions 15U, 15V, and 15W between the inverter 10 and the motor 20 are disposed in the second sector area 2.

In this configuration, since the inverter 10 is attached to an end portion in the axial direction of the motor 20, the motor 20 and the inverter 10 can be mounted in the wheel 3a of the vehicle wheel 3. Since power units (the motor 20 and the inverter 10) are integrated in the wheel 3a, the electric wheel system 1000 can be downsized as compared with a case where the inverter 10 is attached to a portion (for example, the upper arm 32) separate from the motor 20. As described above, in the present embodiment, since downsizing of the electric wheel system 1000 is realized, a vehicle interior space can be enlarged.

Further, since the electrical connection portions 15U, 15V, and 15W are disposed in the second sector area 2 on the top side of the motor housing 24, the lower ball joint 25 can be disposed close to the rotation axis O side in the first sector area 1 on the ground side of the motor housing 24. By the above, since the kingpin offset Ko can be made small, stability of a vehicle at the time of steering can be improved. That is, according to the present embodiment, it is possible to downsize the electric wheel system 1000 while ensuring stability of a vehicle at the time of steering.

(2) The motor 20 is a three-phase AC motor, and the electrical connection portions 15U, 15V, and 15W are connection portions between AC terminals (15Um, 15Vm, and 15Wm) of three phases of the motor 20 and AC terminals (15Ui, 15Vi, and 15Wi) of three phases of the inverter 10. The electrical connection portions 15U, 15V, and 15W of three phases are disposed at intervals of 120° in the circumferential direction around the rotation axis O such that a part or all of the electrical connection portions 15U, 15V, and 15W are located in the second sector area 2.

The electrical connection portions 15U, 15V, and 15W generate heat when large current is applied to a coil of the stator 23. In the present embodiment, since the electrical connection portions 15U, 15V, and 15W are disposed to be dispersed in the circumferential direction, it is possible to effectively prevent temperature rise of the electric wheel unit 100 due to heat generation of the electrical connection portions 15U, 15V, and 15W. Furthermore, as the electrical connection portions 15U, 15V, and 15W are disposed in a dispersed manner, it is possible to reduce thickness of the electric wheel unit 100.

(3) The inverter 10 is disposed at an end portion in the axial direction of the motor 20. For this reason, AC terminals (15Um, 15Vm, and 15Wm) of three phases of the motor 20 and AC terminals (15Ui, 15Vi, 15Wi) of three phases of the inverter 10 can be directly connected without a cable. In a case where the inverter 10 is attached to a portion (for example, the upper arm 32) separate from the motor 20, a cable for connecting an AC terminal of the inverter 10 and an AC terminal of the motor 20 is required. If the cable is long, the cable may be disconnected due to shaking and vibration during traveling of a vehicle. On the other hand, in the present embodiment, since an AC terminal of the inverter 10 and an AC terminal of the motor 20 are directly connected, it is possible to prevent occurrence of a failure of the electric wheel system 1000 due to disconnection of a cable.

Further, in the present embodiment, since the inverter 10 is disposed at an end portion in the axial direction of the motor 20, maintainability can be improved. Furthermore, in the present embodiment, degree of freedom in designing the vehicle suspension device 30 and the vehicle body 9 can be improved as compared with a case where the inverter 10 is attached to a portion (for example, the upper arm 32) separate from the motor 20.

(4) The lower arm 31 extends from the vehicle body 9 to below the inverter 10. In this configuration, the lower ball joint 25 can be disposed close to a width center line CL of the tire 3b. By the above, since an inclination angle of the kingpin axis Ka with respect to the vertical axis can be made large, the kingpin offset Ko can be further reduced.

(5) The inverter 10 includes the power circuit unit 11 that converts DC power into AC power, the control circuit 12 that controls the power circuit unit 11, and the inverter case 18 that houses the power circuit unit 11 and the control circuit 12. The inverter case 18 is provided with the recessed portion 114 recessed upward on the lower surface portion 111 of the inverter case 18, and the lower joint attachment portion 24a protruding from the motor housing 24 toward the vehicle body side is disposed in the recessed portion 114. The lower ball joint 25 is attached to the lower joint attachment portion 24a.

In this configuration, the lower ball joint 25 can be positioned on the upper side as compared with a case where the recessed portion 114 is not provided. In the present embodiment, since the lower ball joint 25 can be disposed close to the rotation axis O, the kingpin offset Ko can be further reduced. By the above, stability of a vehicle at the time of steering can be further enhanced.

Note that stability of a vehicle at the time of steering is improved as the kingpin offset Ko is smaller. For this reason, the kingpin offset Ko is preferably 0 (zero). As a position of the lower ball joint 25 is set so that the kingpin axis Ka and the grounding center point Cp of the tire 3b overlap each other, stability of a vehicle at the time of steering can be enhanced.

In the present embodiment, the recessed portion 114 is provided between the U-phase electrical connection portion 15U and the W-phase electrical connection portion 15W, and both disposing the electrical connection portions 15U, 15V, and 15W of three phases dispersedly and disposing the lower ball joint 25 close to the rotation axis O are realized.

(6) The motor 20 and the inverter 10 are cooled by a common refrigerant. As a common cooling system is used for the inverter 10 and the motor 20, the cooling system can be downsized, and the entire electric wheel system 1000 can be downsized.

(7) The electric wheel system 1000 includes the brake disc 41 that rotates together with the rotor 22 and the brake caliper 42 that stops rotation of the rotor 22 by stopping rotation of the brake disc 41, and the brake disc 41 and the brake caliper 42 are disposed in the wheel 3a. Therefore, according to the present embodiment, it is possible to provide the electric wheel system 1000 of small size in which the motor 20, the inverter 10, the brake disc 41, and the brake caliper 42 are housed in the wheel 3a.

Variations described below are also within the scope of the present invention, and it is also possible to combine a configuration illustrated in the variations with a configuration described in the above-described embodiment, or combine configurations described in different ones of the variations described below.

### <First variation>

In the above embodiment, an example in which the electrical connection portions 15U, 15V, and 15W of the inverter 10 and the motor 20 are disposed at intervals of 120° in the circumferential direction around the rotation axis O. In an alternative implementation, not falling under the scope of the invention, the electrical connection portions 15U, 15V, and 15W may be disposed in a horizontal line or a vertical line such that all of the electrical connection portions 15U, 15V, and 15W are located in the second sector area 2.

### <Second variation>

In the above embodiment, an example in which the recessed portion 114 has a rectangular shape is described, but the present invention is not limited to this. For example, the recessed portion 114 may have a curved shape such as a semicircular shape.

### Reference Signs List

1 first sector area
2 second sector area
3 vehicle wheel
3a wheel
3b tire
9 vehicle body
10 inverter
11 power circuit unit
12 control circuit
15U, 15V, 15W electrical connection portion
15Ui U-phase AC terminal of inverter
15Um U-phase AC terminal of motor
15Vi V-phase AC terminal of inverter
15Vm V-phase AC terminal of motor
15Wi W-phase AC terminal of inverter
15Wm W-phase AC terminal of motor
16 inverter refrigerant inlet
17 inverter refrigerant outlet
18 inverter case
19 inverter cover
20 motor
22 rotor
23 stator
24 motor housing
24a lower joint attachment portion
24b upper joint attachment portion
25 lower ball joint (first arm connection portion)
26 upper ball joint (second arm connection portion)
28 motor refrigerant inlet
29 motor refrigerant outlet
30 vehicle suspension device
31 lower arm (first arm)
32 upper arm (second arm)
33 suspension
33a shock absorber
40 braking device
41 brake disc
42 brake caliper
100 electric wheel unit
110 side plate
111 lower surface portion
114 recessed portion
118 back surface portion
118u, 118v, 118w opening portion
1000 electric wheel system
A, B rotation center
AB line segment
Ka kingpin axis
Ko kingpin offset
O rotation axis

## Claims

1. An electric wheel system (1000) comprising:
an electric wheel unit (100) including a motor (20) that is provided in a wheel (3a) of a vehicle wheel (3) and drives the vehicle wheel (3), and an inverter (10) that is attached to an end portion in an axial direction of the motor (20) and controls the motor (20);
a first arm (31) that connects a ground side of the electric wheel unit (100) and a vehicle body (9); and
a second arm (32) that connects a top side of the electric wheel unit (100) and the vehicle body (9),
wherein the motor (20) includes a rotor (22), a stator (23), and a motor housing (24) that supports the stator (23),
the motor housing (24) includes:
a first arm connection portion (25) connected to the first arm (31); and
a second arm connection portion (26) connected to the second arm (32),
the inverter (10) is disposed at a position overlapping a line segment (AB) connecting the first arm connection portion (25) and the second arm connection portion (26),
in a case of being viewed from a direction along a rotation axis (O) of the rotor (22), the motor housing (24) includes a first sector area (1) having a central angle of 120° about the rotation axis (O) and a second sector area (2) having a central angle of 240° about the rotation axis (O),
the first arm connection portion (25) is disposed in the first sector area (1) disposed on a ground side of the motor housing (24), and
electrical connection portions (15U, 15V, 15W) between the inverter (10) and the motor (20) are disposed in the second sector area (2) disposed on a top side of the motor housing (24),
**characterized in that**
the electrical connection portions (15U, 15V, 15W) are respective connection portions between AC terminals of three phases of the motor (20) and AC terminals of three phases of the inverter (10), and
the electrical connection portions (15U, 15V, 15W) of three phases are disposed at intervals of 120° in a circumferential direction around the rotation axis (O) such that a part or all of the electrical connection portions (15U, 15V, 15W) are located in the second sector area (2).

2. The electric wheel system (1000) according to claim 1, wherein the first arm (31) extends from the vehicle body (9) to below the inverter (10).

3. The electric wheel system (1000) according to claim 1, wherein
the inverter (10) includes a power circuit unit (11) that converts DC power into AC power, a control circuit (12) that controls the power circuit unit (11), and an inverter case (18) that houses the power circuit unit (11) and the control circuit (12),
the first arm connection portion (25) is a ball joint,
the inverter case (18) is provided with a recessed portion (114) recessed upward on a lower surface portion (111) thereof,
an attachment portion (24a) protruding from the motor housing (24) toward a side of the vehicle body (9) is disposed in the recessed portion (114), and
the ball joint is attached to the attachment portion (24a).

4. The electric wheel system (1000) according to claim 1, wherein the motor (20) and the inverter (10) are cooled by a common refrigerant.

5. The electric wheel system (1000) according to claim 1, further comprising:
a brake disc (41) that rotates together with the rotor (22); and
a brake caliper (42) that stops rotation of the rotor (22) by stopping rotation of the brake disc,
wherein the brake disc (41) and the brake caliper (42) are disposed in the wheel (3a).

## Patentansprüche

1. Elektrisches Radsystem (1000), umfassend:
eine elektrische Radeinheit (100), die einen Motor (20), der in einem Rad (3a) eines Fahrzeugrads (3) vorgesehen ist und das Fahrzeugrad (3) antreibt, und einen Wechselrichter (10), der an einem Endabschnitt in einer axialen Richtung des Motors (20) angebracht ist und den Motor (20) steuert, umfasst;
einen ersten Lenker (31), der eine Masseseite der elektrischen Radeinheit (100) und eine Fahrzeugkarosserie (9) verbindet; und
einen zweiten Lenker (32), der eine Oberseite der elektrischen Radeinheit (100) und die Fahrzeugkarosserie (9) verbindet,
wobei der Motor (20) einen Rotor (22), einen Stator (23) und ein Motorgehäuse (24), das den Stator (23) trägt, umfasst,
wobei das Motorgehäuse (24) umfasst:
einen ersten Lenkerverbindungsabschnitt (25), der mit dem ersten Lenker (31) verbunden ist; und
einen zweiten Lenkerverbindungsabschnitt (26), der mit dem zweiten Lenker (32) verbunden ist,
wobei der Wechselrichter (10) an einer Position angeordnet ist, die ein Liniensegment (AB), das den ersten Lenkerverbindungsabschnitt (25) und den zweiten Lenkerverbindungsabschnitt (26) verbindet, überlappt,
in einem Fall, in dem es aus einer Richtung entlang einer Drehachse (O) des Rotors (22) betrachtet wird, das Motorgehäuse (24) einen ersten Sektorbereich (1), der einen Mittelpunktswinkel von 120° um die Drehachse (O) aufweist, und einen zweiten Sektorbereich (2), der einen Mittelpunktswinkel von 240° um die Drehachse (O) aufweist, umfasst,
der erste Lenkerverbindungsabschnitt (25) in dem ersten Sektorbereich (1) angeordnet ist, der auf einer Masseseite des Motorgehäuses (24) angeordnet ist, und
elektrische Verbindungsabschnitte (15U, 15V, 15W) zwischen dem Wechselrichter (10) und dem Motor (20) in dem zweiten Sektorbereich (2) angeordnet sind, der auf einer Oberseite des Motorgehäuses (24) angeordnet ist,
**dadurch gekennzeichnet, dass**
die elektrischen Verbindungsabschnitte (15U, 15V, 15W) jeweilige Verbindungsabschnitte zwischen Wechselstromanschlüssen von drei Phasen des Motors (20) und Wechselstromanschlüssen von drei Phasen des Wechselrichters (10) sind, und
die elektrischen Verbindungsabschnitte (15U, 15V, 15W) von drei Phasen in Intervallen von 120° in einer Umfangsrichtung um die Drehachse (O) derart angeordnet sind, dass sich ein Teil oder alle der elektrischen Verbindungsabschnitte (15U, 15V, 15W) in dem zweiten Sektorbereich (2) befinden.

2. Elektrisches Radsystem (1000) nach Anspruch 1, wobei sich der erste Lenker (31) von der Fahrzeugkarosserie (9) bis unter den Wechselrichter (10) erstreckt.

3. Elektrisches Radsystem (1000) nach Anspruch 1, wobei
der Wechselrichter (10) eine Leistungsschaltungseinheit (11), die Gleichstromleistung in Wechselstromleistung umwandelt, eine Steuerschaltung (12), die die Leistungsschaltungseinheit (11) steuert, und ein Wechselrichtergehäuse (18), das die Leistungsschaltungseinheit (11) und die Steuerschaltung (12) aufnimmt, umfasst,
der erste Lenkerverbindungsabschnitt (25) ein Kugelgelenk ist,
das Wechselrichtergehäuse (18) mit einem vertieften Abschnitt (114) versehen ist, der an einem unteren Oberflächenabschnitt (111) davon nach oben vertieft ist,
ein Anbringungsabschnitt (24a), der von dem Motorgehäuse (24) in Richtung einer Seite der Fahrzeugkarosserie (9) vorsteht, in dem vertieften Abschnitt (114) angeordnet ist, und
das Kugelgelenk an dem Anbringungsabschnitt (24a) angebracht ist.

4. Elektrisches Radsystem (1000) nach Anspruch 1, wobei der Motor (20) und der Wechselrichter (10) durch ein gemeinsames Kühlmittel gekühlt sind.

5. Elektrisches Radsystem (1000) nach Anspruch 1, ferner umfassend:
eine Bremsscheibe (41), die sich zusammen mit dem Rotor (22) dreht; und
einen Bremssattel (42), der die Drehung des Rotors (22) durch Stoppen der Drehung der Bremsscheibe stoppt,
wobei die Bremsscheibe (41) und der Bremssattel (42) in dem Rad (3a) angeordnet sind.

## Revendications

1. Système de roue électrique (1000) comprenant :
une unité de roue électrique (100) incluant un moteur (20) qui est prévu dans une roue (3a) d'une roue de véhicule (3) et qui entraîne la roue de véhicule (3), et un onduleur (10) qui est fixé à une partie d'extrémité dans une direction axiale du moteur (20) et qui commande le moteur (20) ;
un premier bras (31) qui relie un côté sol de l'unité de roue électrique (100) et une carrosserie de véhicule (9) ; et
un deuxième bras (32) qui relie un côté supérieur de l'unité de roue électrique (100) et la carrosserie de véhicule (9),
dans lequel le moteur (20) inclut un rotor (22), un stator (23), et un carter de moteur (24) qui supporte le stator (23),
le carter de moteur (24) inclut :
une première partie de liaison de bras (25) reliée au premier bras (31) ; et
une deuxième partie de liaison de bras (26) reliée au deuxième bras (32),
l'onduleur (10) est disposé à une position chevauchant un segment de ligne (AB) reliant la première partie de liaison de bras (25) et la deuxième partie de liaison de bras (26),
dans le cas où l'on regarde depuis une direction le long d'un axe de rotation (O) du rotor (22), le carter de moteur (24) inclut une première zone sectorielle (1) ayant un angle au centre de 120° autour de l'axe de rotation (O) et une deuxième zone sectorielle (2) ayant un angle au centre de 240° autour de l'axe de rotation (O),
la première partie de liaison de bras (25) est disposée dans la première zone sectorielle (1) disposée sur un côté sol du carter de moteur (24), et
des parties de connexion électrique (15U, 15V, 15W) entre l'onduleur (10) et le moteur (20) sont disposées dans la deuxième zone sectorielle (2) disposée sur un côté supérieur du carter de moteur (24),
**caractérisé en ce que**
les parties de connexion électrique (15U, 15V, 15W) sont des parties de connexion respectives entre des bornes AC (courant alternatif) de trois phases du moteur (20) et des bornes AC de trois phases de l'onduleur (10), et
les parties de connexion électrique (15U, 15V, 15W) des trois phases sont disposées à des intervalles de 120° dans une direction circonférentielle autour de l'axe de rotation (O) de telle sorte qu'une partie ou la totalité des parties de connexion électrique (15U, 15V, 15W) soient situées dans la deuxième zone sectorielle (2).

2. Système de roue électrique (1000) selon la revendication 1, dans lequel le premier bras (31) s'étend depuis la carrosserie du véhicule (9) jusqu'en dessous de l'onduleur (10).

3. Système de roue électrique (1000) selon la revendication 1, dans lequel
l'onduleur (10) inclut une unité de circuit de puissance (11) qui convertit le courant continu en courant alternatif, un circuit de commande (12) qui commande l'unité de circuit de puissance (11), et un boîtier d'onduleur (18) qui loge l'unité de circuit de puissance (11) et le circuit de commande (12),
la première partie de liaison de bras (25) est un joint à rotule,
le boîtier d'onduleur (18) est pourvu d'une partie en retrait (114) qui est en retrait vers le haut sur une partie de surface inférieure (111) de celui-ci,
une partie de fixation (24a) faisant saillie du carter de moteur (24) vers un côté de la carrosserie de véhicule (9) est disposée dans la partie en retrait (114), et
le joint à rotule est fixé à la partie de fixation (24a).

4. Système de roue électrique (1000) selon la revendication 1, dans lequel le moteur (20) et l'onduleur (10) sont refroidis par un réfrigérant commun.

5. Système de roue électrique (1000) selon la revendication 1, comprenant en outre :
un disque de frein (41) qui tourne avec le rotor (22) ; et
un étrier de frein (42) qui arrête la rotation du rotor (22) en arrêtant la rotation du disque de frein,
dans lequel le disque de frein (41) et l'étrier de frein (42) sont disposés dans la roue (3a).
